Europäisches Patentamt

European Patent Office

Office européen des brevets

(19)

(11) Numéro de publication : **0 504 016 A1**

## DEMANDE DE BREVET EUROPEEN

(12)

(21) Numéro de dépôt : **92400575.4**

(22) Date de dépôt : **05.03.92**

(51) Int. Cl.⁵ : **C08K 13/02, B44C 3/04,**
**// (C08K13/02, 3:38, 5:05)**

(30) Priorité : **08.03.91 FR 9102811**

(43) Date de publication de la demande :
**16.09.92 Bulletin 92/38**

(84) Etats contractants désignés :
**DE ES FR GB IT**

(71) Demandeur : **Mizoule, Henri**
**3, Avenue de Porchefontaine**
**F-78000 Versailles (FR)**

(72) Inventeur : **Mizoule, Henri**
**3, Avenue de Porchefontaine**
**F-78000 Versailles (FR)**

(74) Mandataire : **Warcoin, Jacques et al**
**Cabinet Régimbeau 26, avenue Kléber**
**F-75116 Paris (FR)**

(54) **Pâte à jouer à base d'alcool polyvinylique.**

(57)    La présente invention concerne une composition pour pâte, destinée notamment à être utilisée comme pâte jouet, caractérisée en ce qu'elle est obtenue par immobilisation d'une solution aqueuse d'alcool polyvinylique par un borax

EP 0 504 016 A1

La présente invention concerne une pâte qui, par son caractère ludique, est surtout destinée aux enfants.

On connaît déjà des pâtes jouets de type "pâte à modeler" qui sont essentiellement destinées à être mises sous une forme déterminée par l'enfant afin de représenter des personnages et/ou des objets ; ces pâtes sont faites de produits d'origine minérale, par exemple des argiles ou des produits dérivés d'argile, ou bien de produits d'origine végétale type amidon réticulé.

Ces pâtes à modeler sont, en général, non élastiques et ne sont pas susceptibles d'être étirées, du moins sur une très grande longueur.

On connaît également des pâtes à base de silicone qui sont essentiellement destinées à être étirées puis à être roulées en boule pour retrouver une certaine élasticité qui leur permet de rebondir. Néanmoins, ces pâtes au silicone ont, tout d'abord, un toucher qui n'est pas très agréable et, d'autre part, leurs possibilités d'étirage sont assez limitées.

La présente invention a pour objet une pâte qui présente à la fois une très grande souplesse qui lui permet de rebondir, qui est très ductile mais qui, cependant, peut se révéler cassante si on la tire brusquement.

La pâte selon la présente invention est capable de s'étirer jusqu'à des longueurs tout à fait inattendues, ainsi, à partir d'une boule de 40 g de pâte, il est possible de réaliser de 15 à 20 m de fil. Cette pâte s'étire sous son propre poids et elle est élastique, roulée en boule elle rebondit comme une balle. Son contact est très agréable et elle ne colle absolument pas aux mains.

Une propriété assez étonnante de ce produit est que lorsqu'on le prend dans la main on a une agréable sensation de fraîcheur.

Plus particulièrement, la présente invention concerne donc une composition pour pâte destinée notamment à être utilisée comme pâte jouet, caractérisée en ce qu'elle est obtenue par immobilisation d'une solution aqueuse d'un alcool polyvinylique par un borax et en ce que le borax est utilisé dans un rapport en poids par rapport à l'alcool polyvinylique de 1/5 à 1/10..

De préférence, le rapport est voisin de 1/6.

Cette solution aqueuse d'alcool polyvinylique peut être réticulée par le borax, c'est-à-dire le borate de sodium, ou par des composés équivalents dénommés ci-après borax, sans précision, et qui ont la capacité de réticuler l'alcool polyvinylique (PVA).

L'alcool polyvinylique existe dans de nombreuses qualités dépendant du taux de polymérisation, il convient donc évidemment d'adapter la teneur en borax au PVA utilisé.

La composition selon la présente invention comporte, en outre, un plastifiant qui peut être la glycérine.

La pâte selon l'invention est obtenue, de préférence, comme cela ressortira de l'exemple ci-après, en utilisant de l'eau chaude, de préférence de l'eau bouillante.

Afin de lui conférer un caractère non collant, on ajoute à cette pâte une huile, par exemple une huile de paraffine, et, pour compléter son caractère ludique, il est possible de lui ajouter des parfums, des colorants, des conservateurs tels que l'hydroxy-4-benzoate de méthyle ou produits apparentés. Il est également possible de lui ajouter des nacres de façon à lui donner un aspect particulièrement attrayant.

La pâte ainsi obtenue présente un caractère tout à fait insolite. En effet, cette pâte, qui peut rebondir telle une balle lorsqu'elle est sous forme massive, est susceptible de s'étirer très facilement et même de couler. Ainsi, cette pâte est capable de prendre la forme du récipient qui la contient mais également de prendre la forme d'un objet sur lequel elle est posée. Ceci permet d'habiller ou de décorer toute sorte de figurine, des animaux, des objets divers, de les colorer ou de les transformer. Lorsque l'on place la pâte sur un objet elle coule lentement et enrobe ledit objet d'une fine couche plastique en épousant soigneusement toutes les formes de l'objet, ensuite la pâte, après quelques heures, sèche et l'objet se trouve plastifié.

Il est possible, avec différents jeux de pâtes, de faire des combinaisons de couleurs et éventuellement de varier les formes.

L'objet, une fois qu'il a été plastifié, peut être rendu à son état initial, pour cela il suffit de le plonger dans l'eau pendant quelques minutes, la pâte se ramollit par absorption d'eau et se décolle aisément.

Les exemples suivants sont plus particulièrement destinés à mettre en évidence un procédé de préparation d'une pâte selon la présente invention

## EXEMPLE 1

Les différents ingrédients de la pâte sont mis en présence dans l'ordre décrit ci-après et l'ensemble du processus est conduit à la température de l'eau bouillante.

Les proportions qui jouent un grand rôle dans l'obtention du résultat sont, en général, comprises dans un rapport en poids eau/alcool polyvinylique entre 5/1 et 2/1, de préférence un rapport de l'ordre de 3,5/1, quant au rapport borax/alcool polyvinylique, il est compris entre 1/5 et 1/10, de préférence voisin de 1/6.

Lorsque l'on augment la quantité de borax, on augmente la réticulation du système et la pâte tend à devenir moins ductile.

On mélange, dans les proportions indiquées et dans l'ordre indiqué par la formulation, les éléments suivants :

| | | |
|---|---|---|
| – | Eau bouillante, | 1 500 g |
| 1 | Hydroxy-4-benzoate de méthyle, | 5 g |
| 2 | Alcool polyvinylique, | 430 g |
| 3 | Glycérine, | 100 g |
| 4 | Huile de paraffine, | 50 g |
| 5 | Solution colorante, | 10 g |
| 6 | Solution extrait de parfum, | 2 g |
| 7 | Nacre, | 10 g |
| 8 | Di-sodium tétraborate, | 70 g |

On obtient ainsi environ 2 000 g d'une pâte à jouer selon la présente invention après évaporation des résidus liquides.

## EXEMPLE 2

On prépare une solution A :

– On dissout dans la cuve d'un malaxeur contenant 60 litres d'eau chaude entre 80° et 90° les produits suivants :

| | | |
|---|---|---|
| 1/ | Hydroxy-4-benzoate de méthyle | 300 g |
| 2/ | Alcool polyvinylique | 18 kg |
| 3/ | Glycérol | 6 kg |
| 4/ | Colorant | 10 g |
| 5/ | Solution extrait de parfum | 50 g |
| 6/ | Nacre | 600 g. |

– On agite jusqu'à parfaite dissolution (environ 1 heure).

On prépare une seconde solution B :

– On dissout dans une cuve contenant 15 litres d'eau à 80/90° :

| | | |
|---|---|---|
| 1/ | Hydroxy-4-benzoate de méthyle | 60 g |
| 2/ | Disodium tétraborate | 3 kg |
| 3/ | Huile de parafine | 3 kg |

Pour obtenir la réticulation de la pâte, on incorpore la solution B à la solution A, par exemple, au moyen d'une pompe dont le débit est réglé de façon à incorporer dans un temps de 3 à 4 minutes la solution B à la solution A. Ces 3 à 4 minutes représentent le temps nécessaire à une bonne formation de la pâte et contribuent à obtenir la bonne texture. Après entière incorporation de la solution B à la solution A, on continue le malaxage pendant environ 5 minutes. Après ce temps, la pâte devient plus dure et il n'est plus possible de la malaxer car elle forme un bloc compact qui tourne avec les pales du malaxeur.

## Revendications

1) composition pour pâte, destinée notamment à être utilisée comme pâte jouet, caractérisée en ce qu'elle est obtenue par immobilisation d'une solution aqueuse d'alcool polyvinylique par un borax et en ce que le borax est utilisé dans un rapport en poids par rapport à l'alcool polyvinylique de 1/5 à 1/10.

**2)** composition selon la revendication 1, caractérisée en ce que la pâte contient, en outre, un plastifiant.

**3)** composition selon la revendication 2, caractérisée en ce que le plastifiant est la glycérine.

**4)** composition selon l'une des revendications 1 à 3, caractérisée en ce que la pâte est obtenue dans l'eau chaude.

**5)** composition selon l'une des revendications 1 à 4, caractérisée en ce que la pâte contient une huile.

**6)** composition selon l'une des revendications 1 à 5, caractérisée en ce qu'elle contient un rapport en poids eau/alcool polyvinylique compris entre 5/1 et 2/1.

**7)** composition selon l'une des revendications 1 à 6, caractérisée en ce que le rapport eau/alcool polyvinylique est de l'ordre de 3,5/ 1.

**8)** composition selon l'une des revendications 1 à 7, caractérisée en ce que la pâte contient, en outre, un parfum, un colorant et/ou un agent de conservation.

EP 0 504 016 A1

Office européen
des brevets

**RAPPORT DE RECHERCHE EUROPEENNE**

Numero de la demande

EP 92 40 0575

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | DE-A-2 935 019 (PELIKAN AG)<br>* page 2, alinéa 2 *<br>* page 3, alinéa 2; revendication; exemples * | 1-3,6,8 | C08K13/02<br>B44C3/04<br>//(C08K13/02,<br>3:38,5:05) |
| X | WORLD PATENTS INDEX LATEST<br>Derwent Publications Ltd., London, GB;<br>AN 84-206181<br>& JP-A-59 036 278 (FUKAZAWA K.)<br>* abrégé * | 1-3 | |
| X | WORLD PATENTS INDEX LATEST<br>Derwent Publications Ltd., London, GB;<br>AN 80-39033C<br>& JP-A-55 052 086 (KURARAY KK)<br>* abrégé * | 1-3,8 | |
| A | WORLD PATENTS INDEX<br>Derwent Publications Ltd., London, GB;<br>AN 76-95004X<br>& JP-A-51 125 446 (KURARAY KK)<br>* abrégé * | 1-3,8 | |

DOMAINES TECHNIQUES
RECHERCHES (Int. Cl.5)

C08K
B44C

Le présent rapport a été établi pour toutes les revendications

| Lieu de la recherche | Date d'achèvement de la recherche | Examinateur |
|---|---|---|
| LA HAYE | 18 JUIN 1992 | FUHR C.K.B. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

5